# FASCICULE DE BREVET EUROPEEN

(11) **EP 2 755 872 B1**
(45) Date de publication et mention de la délivrance du brevet: **13.01.2016**
(21) Numéro de dépôt: 12758474.6
(22) Date de dépôt: 12.09.2012
(51) Int. Cl.: B60R 25/00, E05F 15/00, G07C 9/00

(54) **PROCÉDÉ D'OUVERTURE D'UN OUVRANT DE VÉHICULE AUTOMOBILE**
VERFAHREN ZUM ÖFFNEN EINER KLAPPE EINES KRAFTFAHRZEUGS
OPENING METHOD FOR A LID OF A MOTOR VEHICLE

(30) Priorité: 12.09.2011 FR 1102740
(43) Date de publication de la demande: 23.07.2014
(73) Titulaire: U-Shin France SAS, 94046 Créteil Cedex (FR)
(72) Inventeur: GEHIN, Frédéric, F-94046 Créteil Cedex (FR); MENARD, Eric, F-94046 Créteil Cedex (FR)
(74) Mandataire: Larger, Solène
(86) Numéro de dépôt international: PCT/EP2012/067803
(87) Numéro de publication internationale: WO 2013/037806

(56) Documents cités:
- EP-A1- 1 902 912
- EP-A1- 2 098 671
- EP-A2- 0 770 749
- WO-A1-2007/006514
- DE-A1-102007 041 288
- DE-A1-102010 018 164
- FR-A1- 2 936 546
- US-A1- 2008 296 926

## Description

La présente invention a trait à un procédé d'ouverture d'un ouvrant de véhicule automobile.

Il est connu des dispositifs permettant l'ouverture d'ouvrant de véhicule automobile utilisant le contact physique de la main ou d'un doigt de l'utilisateur sur un interrupteur permettant l'ouverture dudit ouvrant après déverrouillage du véhicule automobile. L'ouvrant est généralement un coffre ou une porte latérale.

Cependant, ce type d'ouverture d'ouvrant nécessite que l'utilisateur ait une main libre. Cependant, dans le cas où l'utilisateur a toutes ses mains déjà occupées ou dans l'incapacité de les utiliser, il existe un besoin pour permettre l'ouverture d'un ouvrant de véhicule automobile sans utilisation des mains de l'utilisateur.

Pour répondre à ce besoin, il est connu de proposer un dispositif d'ouverture d'un ouvrant dans lequel un capteur permet d'actionner la commande d'ouverture d'ouvrant, voir US 2008/0296926 A.

Le capteur est par exemple électro-optique en utilisant une ou plusieurs caméras.

Parallèlement, il est nécessaire de détecter la présence de l'individu et d'authentifier ce dernier pour que la commande puisse ouvrir le coffre à la personne dûment autorisée. Cependant, dans la mesure où l'ouverture d'ouvrant est autorisée, il est nécessaire d'assurer la fiabilité et l'efficacité de l'ensemble du procédé d'ouverture d'ouvrant pour éviter toute intrusion d'une personne non autorisée dans le véhicule. Ceci permet de garantir la sécurité du véhicule automobile.

On peut citer à titre d'exemple les demandes WO2007/006514 et EP0770749 qui décrivent un procédé d'ouverture de coffre dans lequel l'individu désirant ouvrir le coffre est authentifié.

Or, les dispositifs de détection, d'authentification et de commande d'ouvrant de l'art antérieur nécessitent chacun une consommation électrique suffisamment importante pour que la batterie du véhicule automobile se décharge lorsque ce dernier n'est pas utilisé pendant un moment.

En effet, l'énergie électrique alimentant ces dispositifs provient de la batterie du véhicule automobile. Or, lorsque le moteur du véhicule automobile est à l'arrêt, la batterie se décharge sans se recharger.

Un but de la présente invention est donc de fournir un procédé d'ouverture d'ouvrant d'un véhicule automobile sans utilisation des mains d'un individu ou utilisateur qui autorise une ouverture efficace et fiable de l'ouvrant à cette personne autorisée tout en nécessitant une consommation faible d'énergie électrique.

A cet effet, l'invention a pour objet le procédé d'ouverture d'ouvrant de véhicule automobile selon la revendication 1.

Le procédé de l'invention permet de limiter de manière importante la consommation électrique, surtout lorsque le moteur du véhicule automobile est à l'arrêt, et que la batterie ne peut pas être rechargée. Parallèlement, le procédé de l'invention est très fiable, très efficace et simple d'utilisation.

En effet, le procédé de l'invention permet de manière avantageuse que les éléments permettant l'actionnement de l'ouvrant, de type coffre ou porte latérale, ne soient actifs que lorsque deux conditions sont réunies : la détection d'un individu et l'authentification de ce dernier comme étant une personne autorisée.

Ainsi, on évite de manière avantageuse une projection permanente du motif lumineux sur le sol qui nécessiterait la mise sous tension permanente des moyens de projection.

En outre, l'ouverture de l'ouvrant est réalisée suite à un mouvement précis et prédéterminé du pied de l'utilisateur ce qui permet de discriminer les fausses détections occasionnées par des objets ou des animaux. Le pied est mis en mouvement dans le cadre de la présente invention uniquement pour occulter l'interrupteur lumineux. Une fois que ledit pied est posé sur l'interrupteur virtuel et occulte ce dernier, le moyen de commande de l'ouvrant ouvre l'ouvrant sans qu'un mouvement supplémentaire dudit pied ne soit nécessaire. Autrement dit, l'activation de l'ouverture de l'ouvrant ne se réalise que si le positionnement du pied sur l'interrupteur virtuel est conforme à ce qui est attendu.

En cas de non exécution conforme, un signal est émis pour indiquer que le mouvement n'a pas été correctement utilisé. Ainsi, on permet d'optimiser le temps de fonctionnement de l'ensemble d'actionnement de l'ouverture de l'ouvrant et donc de limiter la mise sous tension des moyens de projections à la durée minimale d'ouverture du coffre.

Le procédé de l'invention peut en outre comporter l'une ou plusieurs des caractéristiques suivantes, prises séparément ou en combinaison :
- le capteur non capacitif est un capteur optique ;
- dans l'étape D, la façon prédéterminée comporte une direction de mouvement prédéterminée, un ensemble de dimensions et/ou de formes géométriques, et la durée durant laquelle le pied occulte le motif lumineux pour que le moyen de commande ouvre l'ouvrant ce qui permet d'éviter qu'un objet impromptu tel qu'une branche d'arbre n'actionne l'interrupteur virtuel ;
- le moyen de guidage de la direction du mouvement prédéterminée est un arc de cercle centré sur l'interrupteur virtuel, ce qui permet de guider de manière simple et efficace l'utilisateur ;
- la direction du mouvement prédéterminée est sensiblement perpendiculaire au plan formé par l'ouvrant du véhicule automobile ce qui permet à l'utilisateur de rester face à l'ouvrant ;
- l'étape B est réalisée de manière permanente ce qui rend cette étape indépendante de l'état du véhicule automobile ;
- dans l'étape E, le signal est un clignotement de l'interrupteur virtuel, un changement de couleur de l'interrupteur virtuel, une projection d'un motif lumineux distinct de celui de l'interrupteur virtuel et/ou un signal sonore ce qui permet d'éviter toute confusion pour l'utilisateur entre le signal et l'interrupteur virtuel ;
- le procédé comporte une étape supplémentaire F entre les étapes B et C, dans laquelle un moyen d'adaptation de la zone de détection permet d'adapter la taille de la zone de détection en fonction d'un nombre prédéterminé d'étapes A et B dans lesquelles au cours de l'étape B, l'authentification de l'utilisateur n'est pas réalisée ce qui permet d'ajuster voire de réduire la sensibilité du capteur capacitif ou non capacitif;
- le procédé de l'invention comprend en outre une étape G dans laquelle la zone de détection reprend une taille correspondante à la taille initiale après que l'authentification au cours de l'étape B a lieu ou dès que le véhicule automobile est verrouillé par tous moyens ce qui permet de retrouver la sensibilité initiale du capteur

capacitif ou non capacitif, la taille initiale correspondant à la taille de la zone de détection lorsque l'étape A est réalisée pour la première fois.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est un schéma d'un mode de réalisation du procédé de l'invention,
- la figure 2 est une vue en perspective d'un mode de réalisation de l'étape C du procédé de l'invention.

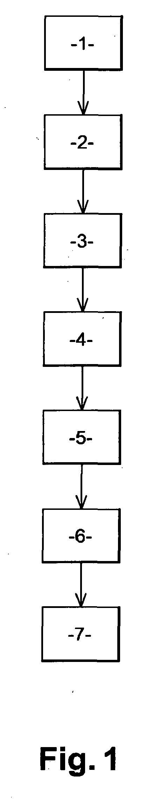

Comme représenté sur la figure 1, le procédé de l'invention d'ouverture d'ouvrant de véhicule automobile comprend les étapes dans lesquelles :
Etape A (référence 1) - on détecte la présence d'au moins une partie du corps d'un individu par un capteur capacitif ou non capacitif;
Etape B (référence 2)- on authentifie l'individu comme étant autorisé à déverrouiller le véhicule par un moyen d'authentification;
Etape C (référence 5)- on réalise un interrupteur virtuel en projetant sur le sol sur lequel repose le véhicule automobile sous la forme d'un motif lumineux ;
Etape D (référence 6)- l'individu met son pied de sorte à occulter l'interrupteur virtuel selon une façon prédéterminée ;
Etape E (référence 7)- si le mouvement du pied n'est pas effectué selon la façon prédéterminée, un signal est envoyé pour indiquer d'effectuer de nouveau le mouvement du pied ; ou si le mouvement est effectué selon la façon prédéterminée, un moyen de commande ouvre l'ouvrant.

Grâce à l'invention, la consommation électrique est limitée du fait que les étapes C, D et E n'ont lieu qu'une fois les étapes A et B réalisées.

La sécurité contre une ouverture non désirée dans le cas d'un individu malveillant, d'un objet ou d'un animal impromptu, est renforcée d'une part par la succession des étapes avec la présence de l'étape B et d'autre part par le fait que l'ouverture de l'ouvrant n'est réalisée que si le mouvement du pied est réalisée selon une façon bien précise.

Par ailleurs, la durée de projection du motif lumineux sur le sol est optimisée par le fait qu'en cas de mouvement incorrect, un signal permet de manière simple, fiable et efficace d'indiquer à l'utilisateur de pouvoir recommencer son mouvement immédiatement.

L'ouvrant du véhicule automobile peut être le coffre, une des portes latérales ou encore une trappe accessible de l'extérieure, telle que la trappe à carburant ou de recharge.

Le procédé de l'invention peut être réalisé lorsque le véhicule est verrouillé ou déverrouillé. Le procédé de l'invention peut également être réalisé lorsque le moteur du véhicule automobile est à l'arrêt ou en fonctionnement avec une vitesse de mouvement sensiblement nulle.

Dans l'étape A du procédé de l'invention, on détecte la présence au moins une partie du corps d'un individu par un capteur capacitif ou non capacitif.

Le capteur capacitif peut être une électrode ou un ensemble d'électrodes disposées de manière adaptée sur la carrosserie du véhicule automobile de sorte à former un champ électromagnétique formant une zone de détection.

En particulier, la ou les électrodes peuvent être montées à proximité de l'ouvrant à ouvrir de sorte à générer une zone de détection comportant un angle large. Ainsi, lorsque l'individu approche du véhicule la détection peut être réalisée selon un angle d'approche large. Autrement dit, l'individu n'a pas à se présenter sensiblement en face du ou des capteurs capacitifs pour être détecté.

La détection a lieu lorsqu'une partie du corps de l'utilisateur, tel que la main, la tête ou encore le pied, pénètre cette zone de détection par modification du champ électromagnétique.

Pour ce faire, la ou les électrodes sont reliées à une unité centrale interprétant la variation du champ électromagnétique en une détection repérée.

Le capteur non capacitif peut être un capteur optique tel qu'une lampe associée à un phototransistor.

Une fois que l'étape A est réalisée, à savoir qu'une détection est repérée, l'étape B peut commencer.

Dans l'étape B du procédé de l'invention, on authentifie l'individu ou l'utilisateur comme étant autorisé à déverrouiller le véhicule par un moyen d'authentification. Par « authentification », on entend une étape permettant de vérifier et de valider l'identité d'un individu comme ayant droit à l'accès au véhicule automobile.

Le moyen d'authentification peut être un transpondeur porté par l'utilisateur ou disposé à côté de celui-ci, ledit transpondeur étant apte à recevoir le signal envoyé par une antenne. Ladite antenne est typiquement reliée à une unité centrale de sorte que ladite unité centrale met en oeuvre l'étape B après avoir validé l'étape A.

Ladite unité centrale peut être la même dans l'étape B et dans l'étape C.

L'étape B est réalisée de manière permanente. Par « permanent », on entend ici que la demande d'authentification est envoyée sans interruption temporelle par un dispositif du moyen d'authentification ou selon une période prédéterminée, par exemple environ toutes les 750 ms. Par conséquent, l'étape B est réalisée quelque soit l'état de verrouillage du véhicule automobile. Ainsi, de manière avantageuse, on évite des mauvaises détections amenant un allumage de l'interrupteur visuel quand le véhicule n'est pas verrouillé.

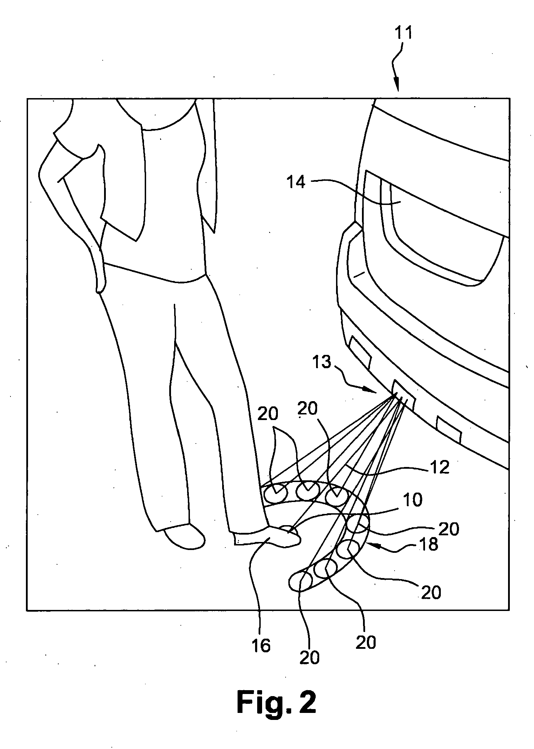

Suite à l'étape B, on projette un motif lumineux 10 réalisant l'interrupteur virtuel au cours de l'étape C sur le sol sur lequel repose le véhicule automobile 11 (voir figure 2).

Le motif lumineux peut être de toute forme, notamment un rond lumineux, une flèche indiquant le sens de mouvement du pied, une croix.

Le motif lumineux peut comporter une ou une multitude de formes, par exemple un ensemble de ronds ou de flèches.

Le motif lumineux peut être de toute couleur, notamment verte ou rouge pour être visible sur le sol, notamment sur le revêtement d'une rue ou d'une route.

Pour ce faire, des moyens de projection permettent de réaliser la projection du motif lumineux. Les moyens de projection peuvent comporter un laser et/ou une ou plusieurs diodes afin de réaliser le faisceau 12 formant le motif lumineux. Ledit ensemble de projection est relié à une unité centrale permettant de déterminer si le mouvement de pied a été fait conformément à la façon prédéterminée et si l'ouvrant peut être ouvert. Ladite unité centrale peut être la même que celle utilisée lors des étapes B et C.

Les moyens de projection peuvent comprendre un ou plusieurs capteurs optiques configurés pour détecter toute variation lumineuse provenant de l'occultation de l'interrupteur virtuel.

Dans le cadre du mode de réalisation de la figure 2, les moyens de projection 13, notamment le capteur, sont disposés vers l'arrière du véhicule afin de permettre l'ouverture du coffre 15.

Ledit capteur optique permet de déterminer si l'objet occultant le motif lumineux a la forme d'un pied 16 en se basant sur des dimensions prédéterminées et une forme géométrique prédéterminée.

Ainsi, les dimensions prédéterminées peuvent être une largeur comprise entre 5 cm et 12 cm, une longueur comprise entre 25 cm et 35 cm ainsi qu'une hauteur comprise entre 1 cm et 15 cm.

Ainsi, un objet présentant une largeur, une hauteur et une longueur comprises dans les intervalles ci-dessus et présentant une forme adaptée est considéré comme un pied.

En outre, l'occultation doit durer une durée prédéterminée. A titre d'exemple, la durée peut être comprise entre 50 ms et 500 ms.

Ainsi, on évite de manière avantageuse toute irruption d'un objet ou d'un petit animal surgissant de manière brève et occultant le motif lumineux puisse être actionné le moyen de commande avant que l'individu autorisé ait pu mettre son pied sur l'interrupteur virtuel.

De manière avantageuse, le procédé de l'invention peut comporter une étape supplémentaire F (référence 3) entre les étapes B et C, dans laquelle un moyen d'adaptation de la zone de détection permet d'adapter la taille de la zone de détection en fonction d'un nombre prédéterminé d'étapes A et B, dans lesquelles au cours de l'étape B, l'authentification de l'utilisateur n'est pas réalisée. Ainsi, de manière avantageuse, il est possible d'ajuster la sensibilité du capteur capacitif ou non capacitif et de la détection.

Ainsi, on peut diminuer la taille de la zone de détection. Ceci permet de diminuer la sensibilité de la détection et de limiter le nombre de fausse détection. De cette manière, on diminue la consommation électrique puisqu'on empêche de mettre en oeuvre les étapes B à F lorsque le véhicule est stationné dans un lieu de passage dans lequel il y aurait beaucoup de détection à l'étape A.

Ainsi, on limite encore avantageusement la consommation de puissance électrique à la quantité nécessaire pour une détection efficace. Dans ce cas-là, on évite la détection des personnes de passage non autorisée.

Pour ce faire, par exemple on peut réduire de 25% la sensibilité au bout de 10 détections à l'étape A sans authentification à l'étape B.

Le procédé de l'invention peut comporter en outre une étape G (référence 4) dans laquelle la zone de détection reprend une taille correspondante à la taille initiale après que l'authentification au cours de l'étape B a lieu ou dès que le véhicule automobile est verrouillé par tous moyens. Ainsi, après avoir adapté la sensibilité de détection à l'environnement du véhicule automobile, il est possible de retrouver la sensibilité initiale du capteur capacitif ou non capacitif, la taille initiale correspondant à la taille de la zone de détection lorsque l'étape A est réalisée pour la première fois.

Ceci peut être avantageux lorsque le véhicule automobile n'est plus stationné dans une zone de fort passage mais dans un stationnement isolé.

Pour ce faire, la sensibilité est redéfinie à son niveau optimum, pouvant être le niveau de sensibilité initiale, lorsque l'authentification est réalisée en étape B ou que le véhicule change d'état de verrouillage.

Selon l'étape D du procédé de l'invention, l'individu met son pied de sorte à occulter l'interrupteur virtuel selon une façon prédéterminée.

La façon prédéterminée peut comporter la direction du mouvement du pied, un ensemble de dimensions et/ou de formes géométriques, et la durée durant laquelle le pied occulte le motif lumineux. On évite de manière avantageuse qu'un objet impromptu tel qu'une branche d'arbre n'actionne l'interrupteur virtuel. La façon prédéterminée peut être contrôlée notamment grâce aux moyens de projection indiqués plus haut couplés à une unité centrale.

Un moyen de guidage 18 de la direction du mouvement du pied 16 peut être associé audit interrupteur virtuel 10. Ainsi, l'individu ou l'utilisateur est guidé de manière simple et efficace. Le moyen de guidage peut être de toute forme centrée sur l'interrupteur virtuel afin de dégager une direction du mouvement du pied. Ainsi, comme représenté sur la figure 2, ledit moyen de guidage est un arc de cercle centré sur l'interrupteur virtuel 14. Pour ce faire, on peut associer comme représenté sur la figure 2 des moyens de projection supplémentaires de motifs lumineux tels que des rond lumineux 20 autour dudit interrupteur.

Des capteurs optiques permettent de détecter toute variation de luminosité due à un faisceau intercepté par un objet ou par un pied. Les capteurs optiques sont typiquement reliés à une unité centrale ce qui permet de déterminer que le mouvement du pied n'a pas été fait correctement et de ne pas déclencher l'ouverture de l'ouvrant.

La direction du mouvement peut être sensiblement perpendiculaire au plan formé par l'ouvrant du véhicule automobile. Ainsi, l'utilisateur peut rester face à l'ouvrant à une distance raisonnable de celui-ci ce qui permet de ne pas être blessé lors de l'ouverture de l'ouvrant ou de devoir se déplacer pour permettre ladite ouverture.

De manière avantageuse, les moyens de projection supplémentaires 20 utilisent une longueur d'onde invisible pour l'homme. Ceci permet de ne pas visualiser les faisceaux utilisés. On améliore de ce fait l'esthétisme et on permet de limiter la confusion lors de l'utilisateur par l'utilisateur.

Selon l'étape E du procédé de l'invention, si le mouvement du pied n'est pas effectué selon la façon prédéterminée, un signal est envoyé pour indiquer d'effectuer de nouveau le mouvement du pied ; ou si le mouvement est effectué selon la façon prédéterminée, un moyen de commande ouvre l'ouvrant.

Autrement dit, si le pied n'est pas mis selon la façon prédéterminée, un signal est envoyé pour recommencer l'étape D; ou si le pied est mis selon la façon prédéterminée, un moyen de commande ouvre l'ouvrant.

Comme indiqué plus haut, l'activation de l'ouverture de l'ouvrant, dans le présent exemple du coffre, est réalisée après occultation du motif lumineux selon une durée et un positionnement particulier du pied. Le mouvement sert à disposer le pied sur l'interrupteur virtuel pour occulter le motif lumineux. Dans le cas où il s'avère nécessaire de recommencer l'étape D, l'individu doit donc bouger son pied pour repositionner correctement ce dernier selon la durée prédéterminée. L'individu sait qu'il doit repositionner le pied grâce à l'envoie du signal.

Le signal peut être un clignotement de l'interrupteur virtuel, un changement de couleur de l'interrupteur virtuel, une projection d'un motif lumineux distinct de l'interrupteur virtuel et/ou un signal sonore ce qui permet d'éviter toute confusion pour l'utilisateur entre le signal et l'interrupteur virtuel.

## Revendications

1. Procédé d'ouverture d'ouvrant de véhicule automobile (11) comprenant les étapes dans lesquelles :
Etape A (1)- on détecte la présence d'au moins une partie du corps d'un individu par un capteur capacitif ou non capacitif;
Etape B (2)- on authentifie l'individu comme étant autorisé à déverrouiller le véhicule (11) par un moyen d'authentification;
Etape C (5) - on réalise un interrupteur virtuel (14) en projetant sur le sol sur lequel repose le véhicule automobile (11) sous la forme d'un motif lumineux (10);
Etape D (6)- l'individu met son pied (16) de sorte à occulter l'interrupteur virtuel (14) selon une façon prédéterminée comportant une direction de mouvement prédéterminée;
Etape E (7)- si le pied (16) n'est pas mis selon la façon prédéterminée, un signal est envoyé pour recommencer l'étape D; ou
si le pied (16) est mis selon la façon prédéterminée, un moyen de commande ouvre l'ouvrant (15),
dans lequel un moyen de guidage (18) de la direction du mouvement prédéterminée est associé audit interrupteur virtuel (14).

2. Procédé selon la revendication précédente, dans lequel le capteur non capacitif est un capteur optique.

3. Procédé selon l'une quelconque des revendications 1 ou 2, dans lequel dans l'étape D (6), la façon prédéterminée comporte une direction de mouvement prédéterminée, un ensemble de dimensions et/ou de formes géométriques, et la durée durant laquelle le pied (16) occulte le motif lumineux (10) pour que le moyen de commande ouvre l'ouvrant (14).

4. Procédé selon la revendication précédente dans lequel le moyen de guidage de la direction du mouvement prédéterminée est un arc de cercle centré sur l'interrupteur virtuel (14).

5. Procédé selon l'une quelconque des revendications 3 ou 4, dans lequel la direction du mouvement prédéterminée est sensiblement perpendiculaire au plan formé par l'ouvrant (14) du véhicule automobile (11).

6. Procédé selon l'une quelconque des revendications précédentes, dans lequel l'étape B (2) est réalisée de manière permanente.

7. Procédé selon l'une quelconque des revendications précédentes, dans lequel dans l'étape E (7), le signal est un clignotement de l'interrupteur virtuel (14), un changement de couleur de l'interrupteur virtuel (14), une projection d'un motif lumineux distinct de celui de l'interrupteur virtuel (14) et/ou un signal sonore.

8. Procédé selon l'une quelconque des revendications précédentes, comportant une étape supplémentaire F (3) entre les étapes B (2) et C (5), dans laquelle un moyen d'adaptation de la zone de détection permet d'adapter la taille de la zone de détection en fonction d'un nombre prédéterminé d'étapes A (1) et B (2) dans lesquelles au cours de l'étape B (2), l'authentification de l'utilisateur n'est pas réalisée.

9. Procédé selon la revendication précédente, comprenant en outre une étape G (4) dans laquelle la zone de détection reprend une taille correspondante à la taille initiale après que l'authentification au cours de l'étape B (2) a lieu ou dès que le véhicule automobile (11) est verrouillé par tous moyens.

## Patentansprüche

1. Verfahren zum Öffnen Kraftfahrzeugtür (11), umfassend die Schritte:
Schritt A (1) - Nachweis der Anwesenheit von mindestens einem Teil des Körpers eines Individuums durch einen kapazitiven oder nicht-kapazitiven Sensor;
Stufe B (2) - es authentifiziert den einzelnen als berechtigt, das Fahrzeug (11) durch ein Authentifizierungsmittel zu entriegeln;
Schritt C (5) - einem virtuellen Switch durchgeführt wird (14) auf dem Boden hervorstehenden, auf der das Kraftfahrzeug (11) in Form eines Lichtmusters (10);
Schritt D (6) - die einzelnen setzt den Fuß (16) so zu verdecken, um den virtuellen Switch (14) in einer vorgegebenen Weise mit einer vorbestimmten Bewegungsrichtung;
Schritt E (7), - wenn der Fuß (16) nicht in der vorgegebenen Art und Weise platziert, wird ein Signal erneut gesendet zu Schritt D; oder wenn der Fuß (16) in der vorgegebenen Art und Weise platziert, die Öffnung eine Steuereinrichtung öffnet (15),
wobei ein Führungsmittel (18) in der vorbestimmten Bewegungsrichtung ist mit dem genannten virtuellen Switch (14).

2. Verfahren nach dem vorhergehenden Anspruch, wobei der nicht-kapazitiven Sensor ein optischer Sensor ist.

3. Verfahren nach einem der Ansprüche 1 oder 2, wobei in Schritt D (6), eine vorbestimmte Bewegungsrichtung, einen Satz von Abmessungen und / oder geometrische Formen umfasst die vorbestimmte Weise und die Zeitdauer, wobei der Fuß (16) verdeckt die Lichtmuster (10), so dass die Steuermittel die Öffnung (14) öffnet.

4. Verfahren nach einem der vorhergehenden Ansprüche, wobei die vorgegebene Bewegungsrichtung der Führungseinrichtung ist ein Kreisbogen an den virtuellen Switch (14) zentriert ist.

5. Verfahren nach einem der Ansprüche 3 oder 4, wobei die vorgegebene Bewegungsrichtung im Wesentlichen senkrecht zu der durch die Flügel (14) des Kraftfahrzeugs (11) gebildeten Ebene.

6. Verfahren nach einem der vorhergehenden Ansprüche, wobei der Schritt B (2) permanent gemacht.

7. Verfahren nach einem der vorhergehenden Ansprüche, wobei in Schritt E (7), ist das Signal ein Blinken des virtuellen Switch (14), eine Farbänderung des virtuellen Switches (14), Projektion eines Lichtmusters sich von derjenigen des virtuellen Switches (14) und / oder ein Warnsignal ab.

8. Verfahren nach einem der vorhergehenden Ansprüche, umfassend einen zusätzlichen Schritt F (3) zwischen den Schritten b (2) und C (5), wobei ein Mittel zum Anpassen der Detektionszone verwendet wird, um die Anpassung Größe des Erfassungsbereichs entsprechend einer vorbestimmten Anzahl von Schritten (1) und B (2), wobei in dem Schritt B (2), Benutzerauthentifizierung durchgeführt wird.

9. Verfahren nach dem vorhergehenden Anspruch, ferner mit einem Schritt G (4), wobei die Detektionszone eine entsprechende Größe auf Originalgröße nach der Authentifizierung im Schritt B (2) enthält auftritt oder wenn das Kraftfahrzeug (11) mit irgendwelchen Mitteln versiegelt.

## Claims

1. A method of opening motor vehicle door (11) comprising the steps of:
Step A (1) - detecting the presence of at least a portion of an individual's body by a capacitive or non-capacitive sensor;
Step B (2) - it authenticates the individual as being authorized to unlock the vehicle (11) by an authentication means;
Step C (5) - a virtual switch is carried out (14) projecting on the floor on which the motor vehicle (11) in the form of a light pattern (10);
Step D (6) - the individual puts his foot (16) so as to obscure the virtual switch (14) in a predetermined manner having a predetermined direction of movement;
Step E (7) - if the foot (16) is not placed in the predetermined manner, a signal is sent again to step D; or if the foot (16) is placed in the predetermined manner, a control means opens the opening (15),
wherein a guide means (18) in the predetermined direction of movement is associated with said virtual switch (14).

2. Method according to the preceding claim, wherein the non-capacitive sensor is an optical sensor.

3. A method according to any one of claims 1 or 2, wherein in Step D (6), the predetermined manner comprises a predetermined movement direction, a set of dimensions and / or geometric shapes, and the length of time wherein the foot (16) obscures the light pattern (10) so that the control means opens the opening (14).

4. Method according to the preceding claim wherein the predetermined movement direction of the guide means is a circular arc centered on the virtual switch (14).

5. Method according to any one of claims 3 or 4, wherein the predetermined direction of movement is substantially perpendicular to the plane formed by the leaf (14) of the motor vehicle (11).

6. A method according to any preceding claim, wherein the step B (2) is made permanently.

7. A method according to any preceding claim, wherein in step E (7), the signal is a flashing of the virtual switch (14), a color change of the virtual switch (14), a projection of a light pattern distinct from that of the virtual switch (14) and / or an audible signal.

8. A method according to any preceding claim, comprising an additional step F (3) between the steps B (2) and C (5), wherein a means for adapting the detection zone is used to adapt the size of the detection area according to a predetermined number of steps (1) and B (2) wherein in the step B (2), user authentication is not performed.

9. Method according to the preceding claim, further comprising a step G (4) wherein the detection zone contains a corresponding size to the original size after the authentication in the step B (2) occurs or when the motor vehicle (11) is locked by any means.
